# EUROPEAN PATENT SPECIFICATION

(11) **EP 4 191 248 B1**
(45) Date of publication and mention of the grant of the patent: **10.07.2024**
(21) Application number: 20955620.8
(22) Date of filing: 30.09.2020
(51) Int. Cl.: G01N 15/14

(54) **AUTOMATIC MEASUREMENT APPARATUS AND METHOD FOR QUANTITATIVE ANALYSIS OF FLY ASH AMOUNT OF CIGARETTE**
AUTOMATISCHE MESSVORRICHTUNG UND VERFAHREN ZUR QUANTITATIVEN ANALYSE DER FLUGASCHEMENGE EINER ZIGARETTE
APPAREIL DE MESURE AUTOMATIQUE ET PROCÉDÉ D'ANALYSE QUANTITATIVE DE QUANTITÉ DE CENDRE VOLANTE DE CIGARETTE

(43) Date of publication of application: 07.06.2023
(73) Proprietor: China Tobacco Yunnan Industrial Co., Ltd, Kunming, Yunnan 650231 (CN)
(72) Inventor: ZHAN, Jianbo, Kunming, Yunnan 650231 (CN); ZHENG, Han, Kunming, Yunnan 650231 (CN); WANG, Hao, Kunming, Yunnan 650231 (CN); YU, Zhenhua, Kunming, Yunnan 650231 (CN); LI, Geng, Kunming, Yunnan 650231 (CN); ZHANG, Ying, Kunming, Yunnan 650231 (CN); WANG, Tao, Kunming, Yunnan 650231 (CN); XIE, Jiao, Kunming, Yunnan 650231 (CN); WANG, Xu, Kunming, Yunnan 650231 (CN); YU, Tingting, Kunming, Yunnan 650231 (CN); LI, Liwei, Kunming, Yunnan 650231 (CN); CHENG, Liang, Kunming, Yunnan 650231 (CN)
(74) Representative: Gille Hrabal Partnerschaftsgesellschaft mbB Patentanwälte
(86) International application number: PCT/CN2020/119141
(87) International publication number: WO 2022/067595

(56) References cited:
- CN-A- 101 408 491
- CN-A- 107 328 779
- CN-A- 109 781 456
- CN-A- 111 426 789
- CN-A- 111 426 793
- CN-A- 112 067 831
- CN-U- 210 400 621
- KR-B1- 101 731 465

## Description

### TECHNICAL FIELD

The present disclosure belongs to the technical field of cigarette fly-ash detection, relating to a method for detecting cigarette fly-ash, and in particular, to a detection device and a detection method for quantitative analysis of cigarette fly-ash amount.

### BACKGROUND

With the development of cigarette technology and increasing consumers' requirements for smoking quality of cigarettes, cigarette combustion ash integrity performance during the smoking process have attracted increasing attention from consumers, as the fall of ash during smoking may pollute the environment and consumers' clothes, to improve the performance of cigarette combustion ash integrity has always been one of the important research directions of the tobacco industry.

At present, research methods for cigarette ash integrity performance are mainly on comparison and evaluation of ash condensation effect of the formed ash column under static combustion condition. It should be noted that the methods in the prior art use static evaluation of cigarette ash integrity performance under static combustion or smoking condition, while consumers are concerned about the quality of cigarette ash integrity during smoking process. It can be seen that the methods in the prior art can only compare and evaluate the overall cigarette ash column after combustion, so as to guide the improvement of cigarette ash integrity performance and quality, which cannot objectively reflect cigarette fly-ash and the amount of fly-ash brought by ash-flicking during the smoking process of consumers.

Fly-ash may pollute the environment and consumers' clothes, and cause dislike among surrounding non-smokers. It can be seen that it is of great significance to study reduction of fly-ash during cigarette smoking based on consumer demand and safety.

Based on the insufficiency of existing detection technologies, meanwhile, due to the characteristics of fly-ash indicators during cigarette combustion process: high measurement accuracy, a large number of measurement samples, and short duration of fly-ash, it is difficult to detect fly-ash by manual means. Thus, it is necessary to develop detection equipment suitable for cigarette development and cigarette fly-ash characteristics. The document CN 107 328 779 A (CHINA TOBACCO YUNNAN IND CO LTD) 7 November 2017 (2017-11-07) discloses an automatic detection device for quantitative analysis of the burning cone of a cigarette.

The present disclosure is proposed to solve the above-mentioned problems.

### SUMMARY

The purpose of the present disclosure is to solve the deficiencies of the prior art. The present disclosure first proposes cigarette fly-ash indicators; during smoking process, cigarette combustion fly-ash includes two parts, the first part is the ash from the cigarette ash column during smoking moving process (rather than ash-flicking process); the second part is the ash not falling into the ash collecting box (the ashtray in the actual process) during ash-flicking process, and that separated from the ash column.

Furthermore, the present disclosure proposes a detection device and detection method for quantitative analysis of cigarette fly-ash amount, which is a quantitative detection method for cigarette fly-ash in the process of cigarette smoking, i.e., the process of cigarette moving smoking and ash-flicking, specifically, the characterization of falling cigarette ash after separated from the ash column, during which machine vision is used to track cigarette combustion in real time, and image processing is used to track and judge cigarette fly-ash, so as to guide cigarette formulation research and quality optimization and upgrading through objective and accurate characterization of cigarette fly-ash indicators.

For achieving the above purpose, the technical solutions adopted in the present disclosure are as follows:
A first aspect of the present disclosure provides an automatic detection device for quantitative analysis of cigarette fly-ash amount, wherein, the detection device includes: a simulated human smoking unit 1, a fly-ash collecting unit 2, an ash-flicking unit 3, an image acquisition unit 4, an image processing unit and a workbench 6;
The simulated human smoking unit 1 includes a simulated human smoking-action manipulator 11, a cigarette holder 12 and a cigarette smoking pipe 13; the simulated human smoking-action manipulator 11 is fixed on the workbench 6; the cigarette holder 12 is fixedly connected to the working end of the simulated human smoking-action manipulator 11; the cigarette smoking pipe 13 is connected to the cigarette holder 12; the simulated human smoking-action manipulator 11 is used for simulating human smoking action; the cigarette holder 2 is used for holding cigarettes with different specifications such as different circumferences; the cigarette smoking pipe 13 is connected to a sucking cylinder for smoking cigarettes;
The fly-ash collecting unit 2 includes a fly-ash collecting belt 21, a belt drive machine 23 and a fly-ash dust collecting device 24, the fly-ash collecting belt 21 is fixed above the workbench 6 through a belt mounting bracket 22;
The fly-ash dust collecting device 24 includes: a negative pressure dust collecting nozzle 241, a negative pressure hose 242, a fly-ash dust collecting chamber 243, a negative pressure fan 244, and a dust collecting nozzle fixing base 245; the negative pressure dust collecting nozzle 241 is fixed above the workbench 6 through the dust collecting nozzle fixing base 245, and the negative pressure dust collecting nozzle 241 is in communication with the fly-ash dust collecting chamber 243 through the negative pressure hose 242; the fly-ash dust collecting chamber 243 is in communication with the negative pressure fan 244, so as to provide negative pressure to the fly-ash dust collecting chamber 243 and the negative pressure hose 242 as well as the negative pressure dust collecting nozzle 241; the belt drive machine 23 drives the fly-ash collecting belt 21 to move toward the negative pressure dust collecting nozzle 241; the negative pressure dust collecting nozzle 241 and the fly-ash collecting belt 21 are at the same level, the negative pressure hose 242, the fly-ash dust collecting chamber 243 and the negative pressure fan 244 are located below the workbench 6;
The ash-flicking unit 3 is separately disposed outside the simulated human smoking-action manipulator 11; the ash-flicking unit includes a cigarette knocking component 31 and/or a cigarette flicking component 32, a falling-ash collecting box 33 and an ash-flicking mounting column 34, the cigarette-knocking component 31 and/or the cigarette-flicking component 32, and the falling-ash collecting box 33 are fixed above the workbench 6 through an ash-flicking mounting column 34; the ash-flicking unit 3 is used for simulating knocking/flicking of cigarettes during the smoking process, so that the ash falling off from a cigarette combustion ash column can be collected into the falling-ash collecting box 33;
The image acquisition unit 4 is located above the fly-ash collecting belt 21, and the image acquisition unit 4 is used to synchronously acquire the images of cigarette fly-ash falling onto the fly-ash collecting belt 21 during the simulated smoking process;
The image processing unit is connected to the image acquisition unit 4; the image processing unit is used to analyze the images of cigarette fly-ash falling onto the fly-ash collecting belt 21 acquired synchronously by the image acquisition unit 4 during the simulated smoking process, and to quantitatively calculate the amount of cigarette fly-ash.

The image processing unit is a working computer, which is a processing platform located outside the outer cabinet 8.

Wherein, human smoking actions includes characteristic actions and trajectories such as simulated smoking, sitting at the desk, flicking ash and turning the wrist after smoking; for the simulated human smoking-action manipulator 1, please refer to the Patent titled "A manipulator simulating the whole process of human smoking cigarette and its simulation method" with the application No. 2020103296239 filed by the applicant on April 20, 2020.

Preferably, the ash-flicking mounting column 34 of the ash-flicking unit 3 is also fixed with a cigarette lighting component 35 and a cigarette extracting component 36;

The cigarette lighting component 35 and the cigarette extracting component 36 are located above the workbench, and the corresponding workbench 6 is provided with a cigarette-butt collecting channel 37, which is connected to a cigarette-butt collecting box 38 below the workbench.

Preferably, the detection device further includes a falling-head detection component 7 located on the opposite side of the ash-flicking unit 3, which is used for monitoring whether and when a cigarette combustion cone falls, or cigarette ash-flicking.

Preferably, the detection device further includes an outer cabinet 8, the simulated human smoking unit 1, the fly-ash collecting unit 2, the ash-flicking unit 3, the image acquisition unit 4 and the workbench 6 are located inside the outer cabinet 8; the image acquisition unit 4 is fixed on the top of the outer cabinet 8; the image processing unit is located outside the outer cabinet 8;

The top of the outer cabinet 8 is further provided with a ventilation opening 81, which is in communication with the ventilation duct 82, the smoke generated by cigarette combustion is discharged into the outer cabinet 8 through the ventilation opening 81 and the ventilation duct 82.

Preferably, the detection device further includes a cigarette supplying component 5 fixed above the outer cabinet 8, which is used for automatic filling of cigarettes into the cigarette holder 12.

Preferably, when simulating human smoking action, smoking regimes including ISO, FTC, Massachusetts or Canadian intense are adopted.

A second aspect of the present disclosure provides a detection method for quantitative analysis of cigarette fly-ash amount, the method adopts the detection device for measurement, including the following steps:
Step (1), clamp and ignite the cigarette on the cigarette holder 2, start the simulated human smoking-action manipulator 11 to simulate cigarette smoking according to a set smoking regime, the fly-ash generated during a moving smoking process of the simulated smoking process falls on the fly-ash collecting belt 21;
Step (2), according to the smoking regime, the simulated smoking process also includes an ash-flicking process: knock/flick the cigarette through the ash-flicking unit 3, so that the ash falling off from the cigarette combustion ash column can be collected into the falling-ash collecting box 33; the fly-ash generated during the ash-flicking process falls onto the fly-ash collecting belt 21;
Step (3), according to the smoking regime, repeat cigarette smoking and cigarette ash-flicking, stop cigarette smoking and cigarette ash-flicking when the cigarette reaches a set length;
Step (4), acquire cigarette fly-ash images on the cigarette fly-ash collecting belt (21) in real time through the image collecting unit (4) before each ash-flicking and those after ash-flicking, transmit the acquired images to the image processing unit;
Step (5), the image processing unit compares and analyzes the received cigarette fly-ash images, calculates the cigarette fly-ash amount A1 the cigarette moving smoking process and the cigarette fly-ash amount A2 during the cigarette ash-flicking process;

The accumulation of A1 and A2 is the cigarette fly-ash amount A during the simulated human smoking process.

Wherein step (4) and step (5) are performed in the process of step (1)-step (3).

Wherein, the calculation method of step (5) is as follows:
(51) The cigarette fly-ash amount A1n during the N^{th} cigarette moving smoking process: subtract the N-1^{th} cigarette fly-ash image after ash-flicking from the N^{th} cigarette fly-ash image before ash-flicking, so as to obtain the increment of cigarette fly-ash falling onto the fly-ash collecting belt 21 during the N^{th} cigarette moving smoking process, after graying and binarizing the subtracted image, calculate the fly-ash area in the image, which is the cigarette fly-ash amount A1n during the N^{th} cigarette moving smoking process;
(52) The cigarette fly-ash amount A2n during the N^{th} cigarette ash-flicking process: subtract the N^{th} cigarette fly-ash image before ash-flicking from the N^{th} cigarette fly-ash image after ash-flicking, so as to obtain the increment of cigarette fly-ash falling onto the fly-ash collecting belt 21 during the N^{th} cigarette ash-flicking process, after graying and binarizing the subtracted image, calculate the fly-ash area in the image, which is the cigarette fly-ash amount A2n during the N^{th} cigarette ash-flicking process;

According to the above process, calculate cigarette fly-ash amount in each cigarette moving smoking process and that in each cigarette ash-flicking process, and the accumulation is the cigarette fly-ash amount A during the simulated human smoking process.

The fly-ash collecting belt 21 in the device has the following functions: ① Carrying cigarette fly-ash, acquiring and calculating the projected area of the cigarette combustion fly-ash in the set area through a camera device to obtain fly-ash amount of the samples detected; ②Real-time rolling function, when fly-ash detection of each cigarette is completed, the belt rolls; meanwhile, it is designed with a negative pressure ash-suction function, when the belt passes through the negative pressure tuyere during the rolling process, fly-ash of the previous cigarette sample is sucked and cleaned by negative pressure air, after rolling for several times, the clean belt can prepare for fly-ash detection of the next cigarette sample. There is no need to use a brush to clean cigarette fly-ash on the fly-ash collecting belt separately, which is not only automatic and efficient, but also avoids the influence of unclean fly-ash collecting belt on the next cigarette sample detection.

Wherein, the purpose of performing graying and binarizing on the subtracted images is to further reduce interference of the environment, e.g., the bright lines on the belt are effectively eliminated.

The present disclosure has the following beneficial effects compared with the prior art:
1. The present disclosure first proposes cigarette fly-ash indicators, during the smoking process, the cigarette combustion fly-ash includes two parts, the first part is the ash from the cigarette ash column during moving smoking process (rather than ash-flicking process); the second part is the ash not falling into the ash collecting box (the ashtray in the actual process) during ash-flicking process, and that separated from the ash column. In the present disclosure, cigarette fly-ash areas during smoking and ash-flicking process are used as cigarette fly-ash amount indicators. Furthermore, the present disclosure provides a detection method for quantitative analysis of cigarette fly-ash amount, which is a quantitative detection method for cigarette fly-ash in the process of cigarette smoking, i.e., the process of cigarette moving smoking and ash-flicking, specifically, the characterization of falling cigarette ash after separated from the ash column, during which machine vision is used to track cigarette combustion in real time, and image processing is used to track and judge cigarette fly-ash, so as to guide cigarette formulation research and quality optimization and upgrading through objective and accurate characterization of cigarette fly-ash indicators.
2. The present disclosure provides a complete set of detection devices, wherein the image acquisition unit 4 directly acquires the images of cigarette fly-ash falling onto the fly-ash collecting belt 21, thus, it is more intuitive to examine fly-ash amount during cigarette moving smoking process and ash-flicking process, and the results are more accurate. In the present disclosure, cigarette fly-ash images on the cigarette fly-ash collecting belt 21 in real time are acquired through the image acquisition unit 4 before each ash-flicking and those after ash-flicking, the acquired images are transmitted to the image processing unit; the image processing unit compares and analyzes the received cigarette fly-ash images, calculates the cigarette fly-ash amount A1 during cigarette moving smoking process and the cigarette fly-ash amount A2 during cigarette ash-flicking process; the accumulation of A1 and A2 is the cigarette fly-ash amount A during the simulated human smoking process. After the sample batch is tested according to the quantity required, the cigarette combustion fly-ash indicators of the batch of samples can be obtained by calculation, and the quality of cigarette fly-ash can be evaluated to guide product research and improvement.
3. In the preferred embodiment of the present disclosure, the fly-ash collecting unit 2 further includes a belt drive machine 23 and a fly-ash dust collecting device 24; the fly-ash dust collecting device 24 includes: a negative pressure dust collecting nozzle 241, a negative pressure hose 242, a fly-ash dust collecting chamber 243, a negative pressure fan 244, and a dust collecting nozzle fixing base 245; the negative pressure dust collecting nozzle 241 is fixed above the workbench 6 through the dust collecting nozzle fixing base 245, and the negative pressure dust collecting nozzle 241 is in communication with the fly-ash dust collecting chamber 243 through the negative pressure hose 242; the fly-ash dust collecting chamber 243 is in communication with the negative pressure fan 244, so as to provide negative pressure to the fly-ash dust collecting chamber 243 and the negative pressure hose 242 as well as the negative pressure dust collecting nozzle 241; the belt drive machine 23 drives the fly-ash collecting belt 21 to move toward the negative pressure dust collecting nozzle 241;
   The fly-ash collecting belt 21 in the device has the following functions: ① Carrying cigarette fly-ash, acquiring and calculating the projected area of the cigarette combustion fly-ash in the set area through a camera device to obtain the fly-ash amount of the samples detected; ②Real-time rolling function, when fly-ash detection of each cigarette is completed, the belt rolls; meanwhile, it is designed with a negative pressure ash suction function, when the belt passes through the negative pressure tuyere during the rolling process, the fly-ash of the previous cigarette sample is sucked and cleaned by negative pressure air, after rolling for several times, the clean belt can prepare for fly-ash detection of the next cigarette sample. Collect ash falling into a collecting bag for unified treatment. During the detection process, the belt is cleaned by the online rolling setting and the negative pressure suction device to realize automatic cleaning of the detection platform during the detection process, so as to meet the needs of continuously and automatically detecting batch samples with high efficiency. The method realizes detection with automation and high efficiency; thus, continuous and rapid detection can be realized without manual intervention.
4. The present disclosure provides a cigarette fly-ash detection device based on machine vision, and establishes a set of actions based on the simulated human cigarette-smoking process, the image acquisition unit 4 directly acquires the images of the cigarette fly-ash falling onto the fly-ash collecting belt 21, thus, it is more intuitive to inspect cigarette fly-ash amount during the process of cigarette moving smoking and ash-flicking, the detection method is fast, accurate, easy to popularize, and the results are more accurate.
5. Compared with the method of artificial smoking experience and subjective judgment of whether fly-ash occurs in cigarettes and fly-ash amount, the method of the present disclosure overcomes the impact of subjective factors, and provides a quantitative detection method with good repeatability, objectivity and high-reliability, which can more accurately evaluate product differences, guide the research on relevant cigarette formulations and improve cigarette quality.

### BRIEF DESCRIPTION OF THE DRAWINGS

FIG. 1 is the structural schematic view of the detection device for quantitative analysis of cigarette fly-ash amount of the present disclosure;
FIG.2 is a structural schematic view of the relative position of the simulated human smoking unit 1 and the ash-flicking unit 3;

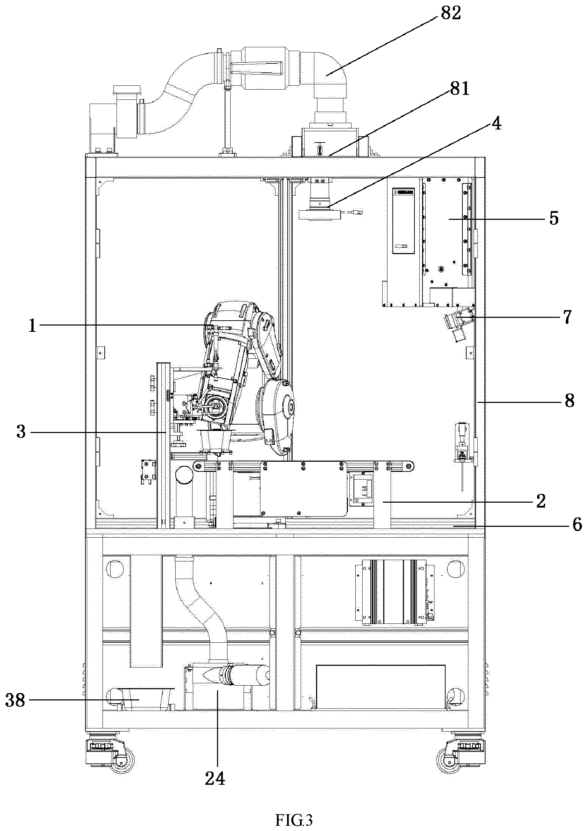

FIG.3 is an overall structural schematic view of the detection device for quantitative analysis of cigarette fly-ash amount of the present disclosure;

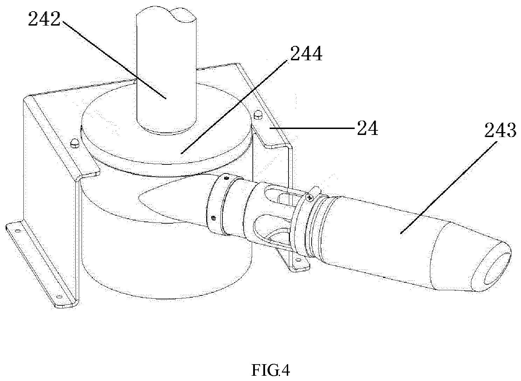

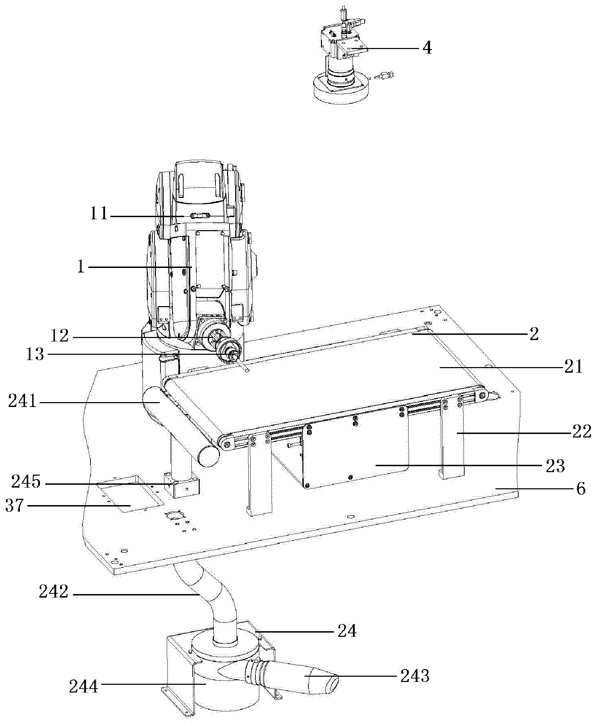

FIG.4 is a structural schematic view of the fly-ash dust collecting device 24 of the present disclosure;

Wherein, the names of reference signs in the description of figures are as follows:
1. Simulated human smoking unit, 2. Fly-ash collecting unit, 3. Ash-flicking unit, 4. Image acquisition unit, 5. Cigarette supplying component, 6. Workbench, 7. Falling-head detection component, 8. Outer cabinet, 11. Simulated human smoking-action manipulator, 12. Cigarette holder, 13. Cigarette smoking pipe, 21. Fly-ash collecting belt, 22. Belt mounting bracket, 23. Belt drive machine, 24. Fly-ash dust collecting device, 31. Cigarette knocking component, 32. Cigarette flicking component, 33. Falling-ash collecting box, 34. Ash-flicking mounting column, 35. Cigarette lighting component, 36. Cigarette extracting component, 37. Cigarette-butt collecting channel, 38. Cigarette-butt collecting box, 81. Ventilation opening, 82. Ventilation duct, 241. Negative pressure dust collecting nozzle, 242. Negative pressure hose, 243. Fly-ash dust collecting chamber, 244. Negative pressure fan, 245. Dust collecting nozzle fixing base.

### DETAILED DESCRIPTION OF THE EMBODIMENT

The present disclosure will be further explained below through specific embodiment.

It is understood by those skilled in the art that, the following embodiment is only for illustrating the present disclosure and should not be interpreted as limiting the scope of the present disclosure. In case no specific technique or condition is indicated in the embodiment, the technique or condition described in the literature in the field or the product specification is based on. In case the materials or equipment used are not indicated with the manufacturer, they are all ordinary products that can be obtained through purchase.

It can be understood by those skilled in the art that, the singular forms "a", "an" and "the" used herein can include the plural forms as well, unless expressly stated otherwise. It should be further understood that "including" used in the description of the present disclosure means that the features, integers, steps, operations, elements and/or components exist; however, the existence or addition of one or more other features, integers, steps, operations, elements, components and/or groups thereof is not excluded. It should be understood that, when an element is referred to be "connected" to another one, it may be directly connected to another element, or there may be intermediate elements as well. Moreover, "connection" as used herein may include wireless connections.

In the description of the present disclosure, unless otherwise stated, "a plurality of" means two or more. The orientation or state relationship indicated by the terms "inside", "above", "below", etc. is based on that shown in the figures, which is only for convenience of describing the present disclosure and simplifying description, rather than indicating or implying that the device or element must have a particular orientation, or must be constructed and operated in a particular orientation, and thus should not be interpreted as limitations of the present disclosure.

In the description of the present disclosure, it should be noted that, the terms "mount", "connect" and "provided with" should be interpreted broadly unless otherwise expressly specified and defined, such as fixed connection, detachable connection, or integral connection; either mechanical connection or electrical connection; direct connection or indirect connection through intermediate media. The specific meanings of the terms above in the present disclosure can be understood by persons skilled in the art in actual conditions.

It is understood by those skilled in the art that, unless otherwise defined, all terms including technical and scientific terms used herein have the same meanings as commonly understood by the ordinary persons skilled in the art to the technical field to which the present disclosure belongs. It should also be understood that terms such as those defined in the general dictionary should be understood to have meanings consistent with those in the context of the prior art; moreover, unless defined as herein, the terms may not be explained with idealized or overly formal senses.

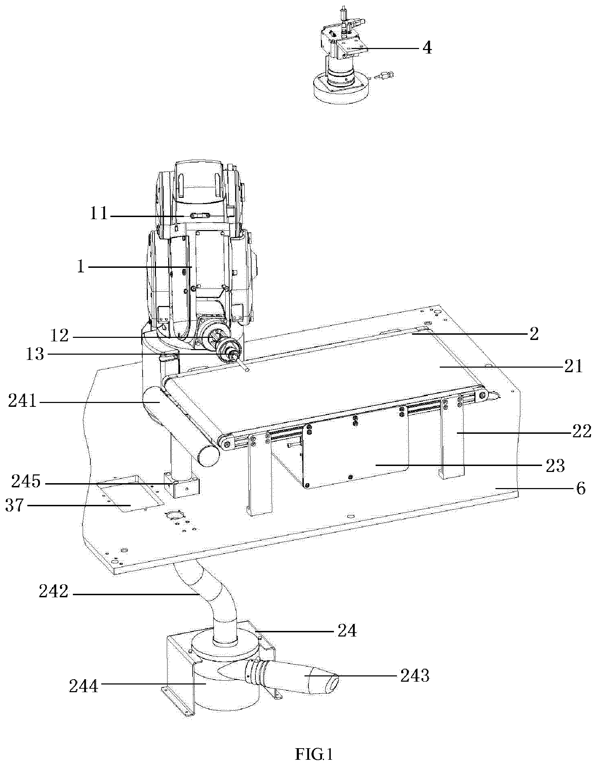

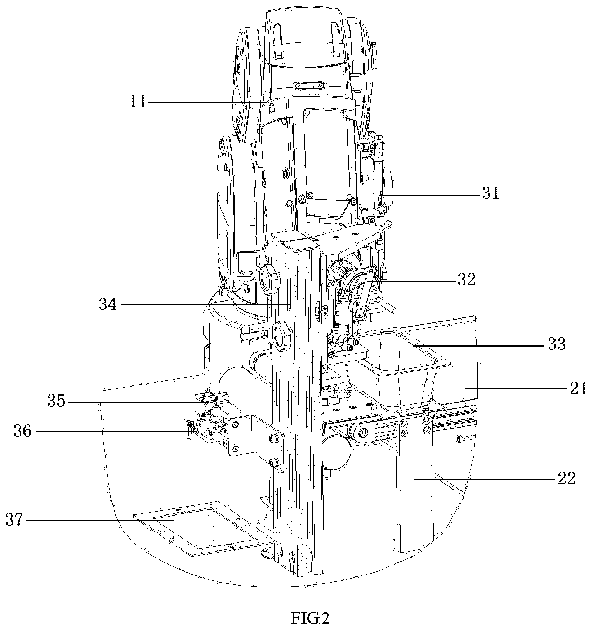

As shown in FIG. 1 and FIG.2, the detection device for quantitative analysis of cigarette fly-ash amount used in the following embodiment includes: a simulated human smoking unit 1, a fly-ash collecting unit 2, an ash-flicking unit 3, an image acquisition unit 4, an image processing unit and a workbench 6;

The simulated human smoking unit 1 includes a simulated human smoking-action manipulator 11, a cigarette holder 12 and a cigarette smoking pipe 13; the simulated human smoking-action manipulator 11 is fixed on the workbench 6; the cigarette holder 12 is fixedly connected to the working end of the simulated human smoking-action manipulator 11; the cigarette smoking pipe 13 is connected to the cigarette holder 12; the simulated human smoking-action manipulator 11 is used for simulating human smoking action; the cigarette holder 2 is used for holding cigarettes with different specifications such as different circumferences; the cigarette smoking pipe 13 is connected to a sucking cylinder for smoking cigarettes;

The fly-ash collecting unit 2 includes a fly-ash collecting belt 21, a belt drive machine 23 and a fly-ash dust collecting device 24, the fly-ash collecting belt 21 is fixed above the workbench 6 through a belt mounting bracket 22;

The fly-ash dust collecting device 24 includes: a negative pressure dust collecting nozzle 241, a negative pressure hose 242, a fly-ash dust collecting chamber 243, a negative pressure fan 244, and a dust collecting nozzle fixing base 245; the negative pressure dust collecting nozzle 241 is fixed above the workbench 6 through the dust collecting nozzle fixing base 245, and the negative pressure dust collecting nozzle 241 is in communication with the fly-ash dust collecting chamber 243 through the negative pressure hose 242; the fly-ash dust collecting chamber 243 is in communication with the negative pressure fan 244, so as to provide negative pressure to the fly-ash dust collecting chamber 243 and the negative pressure hose 242 as well as the negative pressure dust collecting nozzle 241; the belt drive machine 23 drives the fly-ash collecting belt 21 to move toward the negative pressure dust collecting nozzle 241; the negative pressure dust collecting nozzle 241 and the fly-ash collecting belt 21 are at the same level, the negative pressure hose 242, the fly-ash dust collecting chamber 243 and the negative pressure fan 244 are located below the workbench 6;

The ash-flicking unit 3 is separately disposed outside the simulated human smoking-action manipulator 11; the ash-flicking unit includes a cigarette knocking component 31 and/or a cigarette flicking component 32, a falling-ash collecting box 33 and an ash-flicking mounting column 34, the cigarette knocking component 31 and/or the cigarette flicking component 32, and the falling-ash collecting box 33 are fixed above the workbench 6 through the ash-flicking mounting column 34; the ash-flicking unit 3 is used for simulating knocking/flicking of cigarettes during smoking process, so that the ash falling off from a cigarette combustion ash column can be collected into the falling-ash collecting box 33;

The image acquisition unit 4 is located above the fly-ash collecting belt 21, and the image acquisition unit 4 is used to synchronously acquire the images of cigarette fly-ash falling onto the fly-ash collecting belt 21 during smoking process;

The image processing unit is connected to the image acquisition unit 4; the image processing unit is used to analyze the images of cigarette fly-ash falling onto the fly-ash collecting belt 21 acquired synchronously by the image acquisition unit 4 during the simulated smoking process, and to quantitatively calculate cigarette fly-ash amount.

The ash-flicking mounting column 34 of the ash-flicking unit 3 is also fixed with a cigarette lighting component 35 and a cigarette extracting component 36;

The cigarette lighting component 35 and the cigarette extracting component 36 are located above the workbench, and the corresponding workbench 6 is provided with a cigarette-butt collecting channel 37, which is connected to a cigarette-butt collecting box 38 below the workbench.

The detection device further includes a falling-head detection component 7 located on the opposite side of the ash-flicking unit 3, which is used for monitoring whether a cigarette combustion cone falls.

The image processing unit is a working computer, a processing platform located outside the outer cabinet 8, which is not shown in the figures.

The detection device further includes an outer cabinet 8, the simulated human smoking unit 1, the fly-ash collecting unit 2, the ash-flicking unit 3, the image acquisition unit 4 and the workbench 6 are located inside the outer cabinet 8; the image acquisition unit 4 is fixed on the top of the outer cabinet 8; the image processing unit is located outside the outer cabinet 8;

The top of the outer cabinet 8 is further provided with a ventilation opening 81, which is in communication with the ventilation duct 82, and the smoke generated by cigarette combustion is discharged into the outer cabinet 8 through the ventilation opening 81 and the ventilation duct 82.

The detection device further includes a cigarette supplying component 5 fixed above the outer cabinet 8, which is used for automatic filling of cigarettes into the cigarette holder 12.

When simulating human smoking action, the ISO smoking regime is adopted.

### Embodiment

During the detection process of the embodiment, the LED light source is used to illuminate and supplement light to the sample detection environment during the image acquisition process, in order to ensure sufficient and stable detection environment light while reducing interference of the external environment on image acquisition.

Testing environment: temperature: (22±2) °C, relative humidity: (60±5) %.

By using the above-mentioned device, the specific detection method includes the following steps:
Step (1), clamp and ignite the cigarette on the cigarette holder 2, start the simulated human smoking-action manipulator 11 to simulate cigarette smoking according to the set smoking regime, the fly-ash generated during the moving smoking process of the simulated smoking process falls on the fly-ash collecting belt 21;
Step (2), according to the smoking regime, the simulated smoking process also includes ash-flicking process, knock/flick the cigarette through the ash-flicking unit 3, so that the ash falling off from the cigarette combustion ash column can be collected into the falling-ash collecting box 33; the fly-ash generated during ash flicking process falls onto the fly-ash collecting belt 21;
Step (3), according to the smoking regime, repeat cigarette smoking and cigarette ash-flicking, stop cigarette smoking and cigarette ash-flicking when the cigarette reaches the set length;
Step (4), acquire cigarette fly-ash images on the cigarette fly-ash collecting belt (21) in real time through the image collecting unit (4) before each ash-flicking and those after ash-flicking, transmit the acquired images to the image processing unit;
Step (5), the image processing unit compares and analyzes the received cigarette fly-ash images, calculates the cigarette fly-ash amount A1 during cigarette moving smoking process and the cigarette fly-ash amount A2 during cigarette ash-flicking process;

The accumulation of A1 and A2 is the cigarette fly-ash amount A during the simulated human smoking process.

Wherein, step (4) and step (5) are performed in the process of step (1)-step (3).
Wherein, the calculation method of step (5) is as follows:
(51) The cigarette fly-ash amount A1n during the N^{th} cigarette moving smoking process: subtract the N-1^{th} cigarette fly-ash image after ash-flicking from the N^{th} cigarette fly-ash image before ash-flicking, so as to obtain the increment of cigarette fly-ash falling onto the fly-ash collecting belt 21 during the N^{th} cigarette moving smoking process, after graying and binarizing the subtracted image, calculate the fly-ash area in the image, which is the cigarette fly-ash amount A1n during the N^{th} cigarette moving smoking process;
(52) The cigarette fly-ash amount A2n during the N^{th} cigarette ash-flicking process: subtract the N^{th} cigarette fly-ash image before ash-flicking from the N^{th} cigarette fly-ash image after ash-flicking, so as to obtain the increment of cigarette fly-ash falling onto the fly-ash collecting belt 21 during the N^{th} cigarette ash-flicking process, after graying and binarizing the subtracted image, calculate the fly-ash area in the image, which is the cigarette fly-ash amount A2n during the N^{th} cigarette ash-flicking process;

According to the above process, calculate cigarette fly-ash amount in each cigarette moving smoking process and that in each cigarette ash-flicking process, and the accumulation is the cigarette fly-ash amount A during the simulated human smoking process.

The time and images of the samples with fly-ash occurring in the detection are recorded, and five samples of each specification are selected for characterization of fly-ash results, as shown in Table 2 and Table 3.

### 1 Embodiment of detection

The circumference of cigarettes detected: 24.2 mm

**Table 1 Fly-ash amount detected in different cigarette samples (unit: mm²)**

| Group No. | Sample detected | Detection item | Detected sample No. | | | | | Mean value |
|---|---|---|---|---|---|---|---|---|
| | | | 1 | 2 | 3 | 4 | 5 | |
| 1 | Sample cigarettes with vertical thread cigarette paper | Fly-ash amount during smoking process | 48.97 | 52.98 | 44.85 | 21.48 | 37.12 | 41.08 |
| | | Fly-ash amount during ash-flicking process | 0 | 1.73 | 0 | 0 | 1.84 | 0.71 |
| | | Total fly-ash amount | 48.97 | 54.71 | 44.85 | 21.48 | 38.95 | 41.79 |
| 2 | Sample cigarettes with grid pattern cigarette paper | Fly-ash amount during smoking process | 50.34 | 18.12 | 26.46 | 61.3 | 34.4 | 38.12 |
| | | Fly-ash amount during ash-flicking process | 0 | 0 | 1.65 | 0 | 0 | 0.33 |
| | | Total fly-ash amount | 50.34 | 18.12 | 28.11 | 61.3 | 34.4 | 38.45 |

Corresponding images (all are the last images):

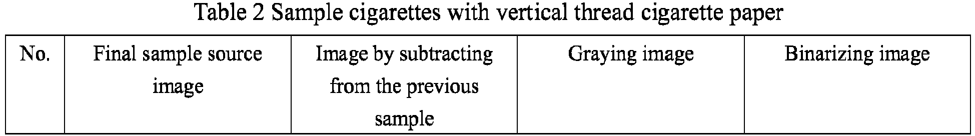

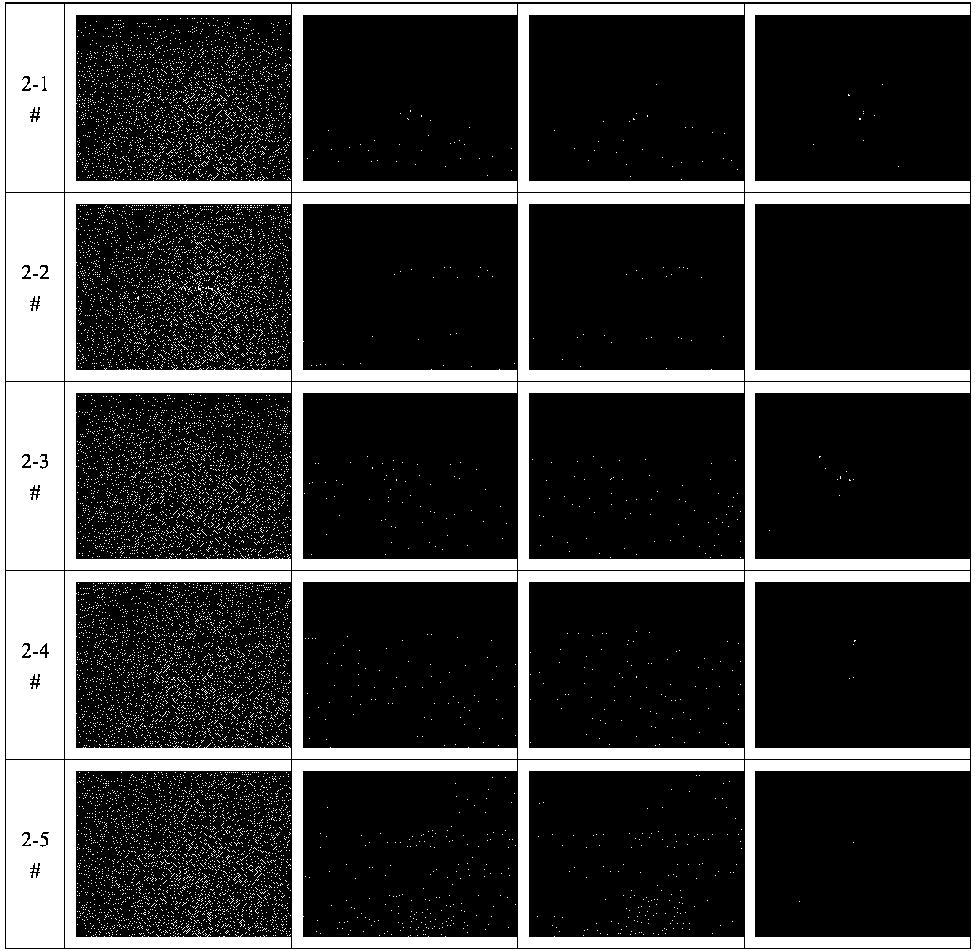

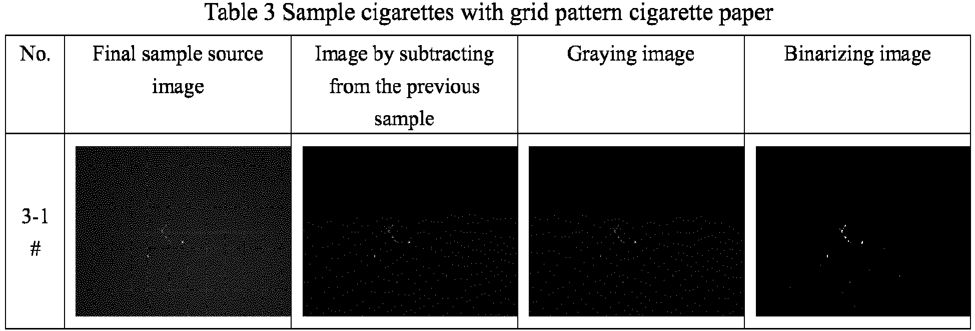

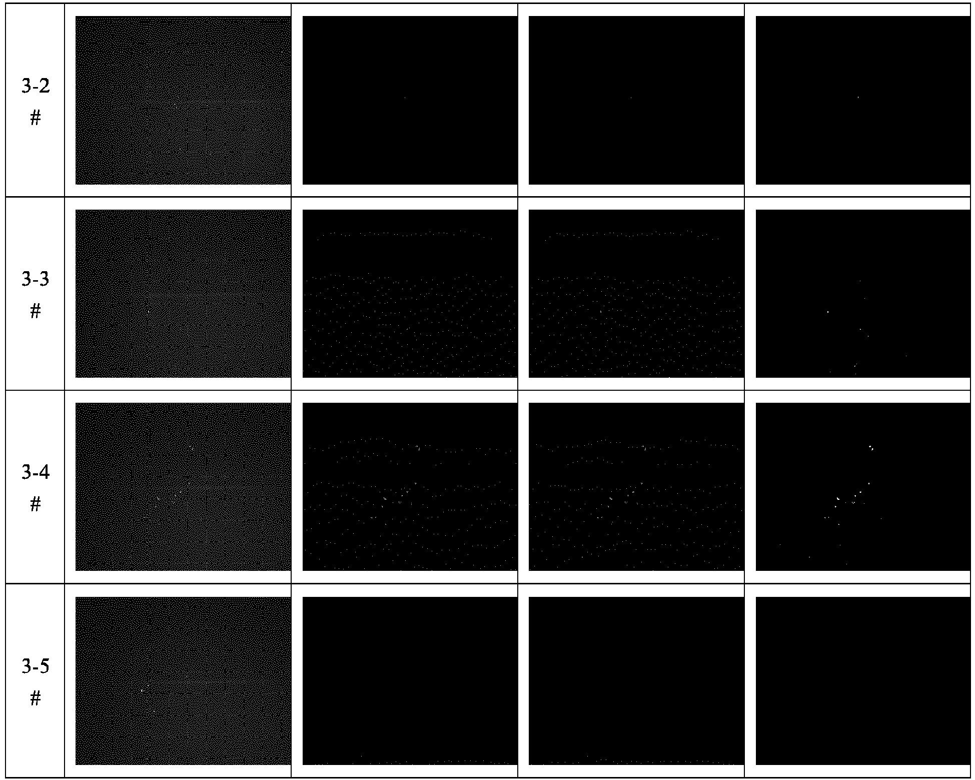

### 2 Embodiment of detection process

Take 2-3# as an example to illustrate the detection and data-processing process.

**Table 4 Testing data record table (unit: mm²)**

| **No.** | **Measurement point** | **Fly-ash area during smoking process** | **Fly-ash area during ash-flicking process** | **Total fly-ash area** | **No.** | **Measurement point** | **Fly-ash area during smoking process** | **Fly-ash area during ash-flicking process** | **Total fly-ash area** |
|---|---|---|---|---|---|---|---|---|---|
| 1 | Before the 1^{st} ash-flicking | 0 | - | 0 | 11 | Before the 6^{th} ash-flicking | 25.173 | - | 27.011 |
| 2 | After the 1^{st} ash-flicking | - | 0 | 0 | 12 | After the 6^{th} ash-flicking | - | 1.838 | 27.011 |
| 3 | Before the 2^{nd} ash-flicking | 4.688 | - | 4.688 | 13 | Before the 7^{th} ash-flicking | 28.294 | - | 30.132 |
| 4 | After the 2^{nd} ash-flicking | - | 0 | 4.688 | 14 | After the 7^{th} ash-flicking | - | 1.838 | 30.132 |
| 5 | Before the 3^{rd} ash-flicking | 8.318 | - | 8.318 | 15 | Before the 8^{th} ash-flicking | 28.294 | - | 30.132 |
| 6 | After the 3^{rd} ash-flicking | - | 1.838 | 10.156 | 16 | After the 8^{th} ash-flicking | - | 1.838 | 30.132 |
| 7 | Before the 4^{th} ash-flicking | 16.498 | - | 18.336 | 17 | Before the 9^{th} ash-flicking | 29.888 | - | 31.726 |
| 8 | After the 4^{th} ash-flicking | - | 1.838 | 18.336 | 18 | After the 9^{th} ash-flicking | - | 1.838 | 31.726 |
| 9 | Before the 5^{th} ash-flicking | 23.646 | - | 25.484 | 19 | Before the 10^{th} ash-flicking | 32.017 | - | 33.855 |
| 10 | After the 5^{th} ash-flicking | - | 1.838 | 25.484 | 20 | After the 10^{th} ash-flicking | - | 1.838 | 33.855 |

It can be seen from the detection data of 1-5# samples that, fly-ash occurs after the 3^{rd} ash-flicking, the detection process is illustrated by taking image acquisition before and after the 3^{rd} detection as an example.

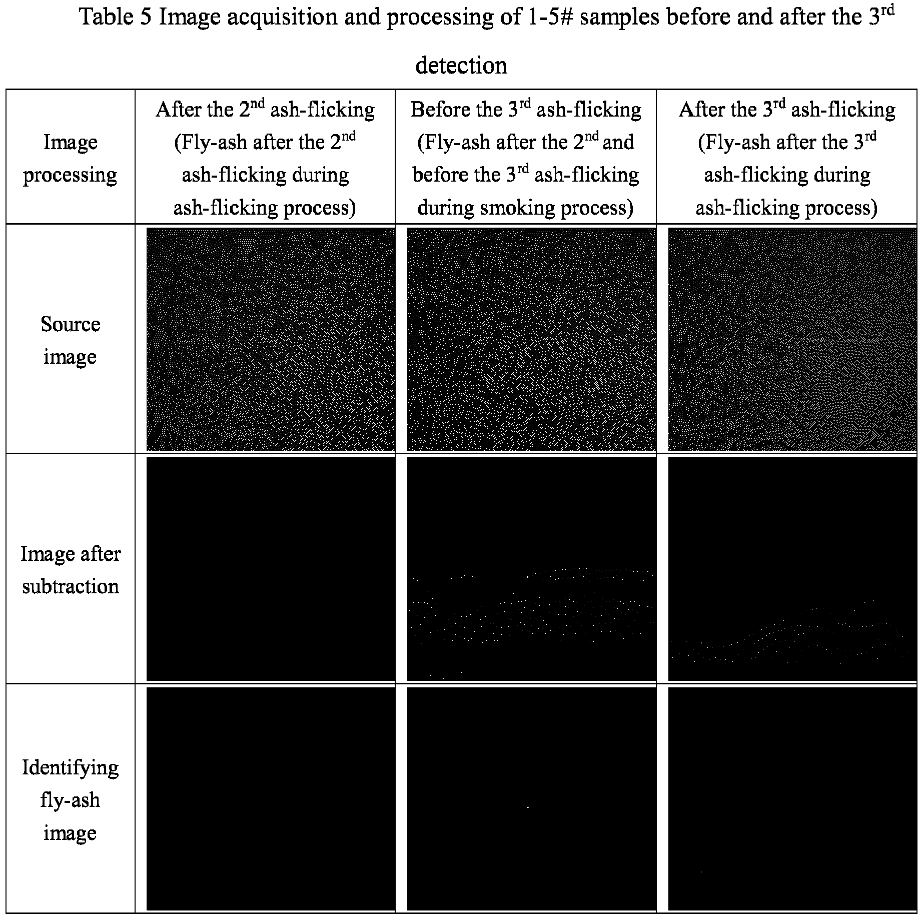

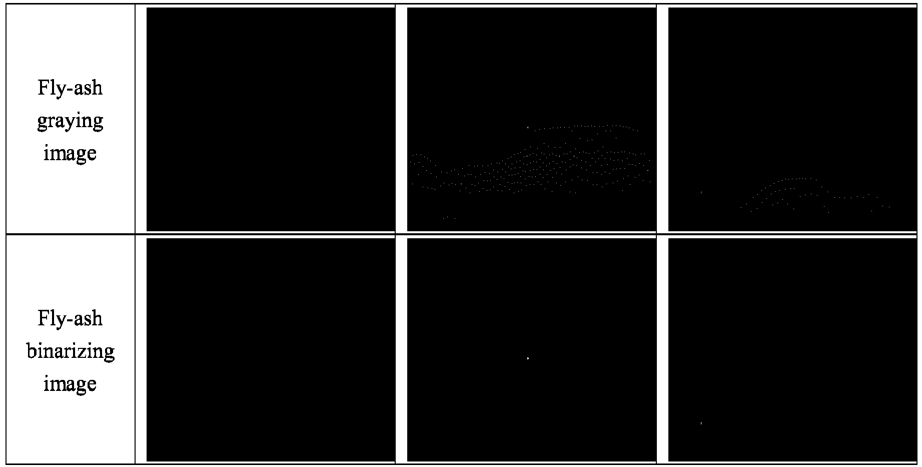

It can be seen from the above embodiment that cigarettes of different specifications all produce a certain degree of fly-ash during the combustion process, in the present disclosure, the image acquisition unit 4 directly acquires the images of cigarette fly-ash falling onto the fly-ash collecting belt 21, thus, it is more intuitive to examine cigarette fly-ash amount during cigarette moving smoking process and ash-flicking process, and the results are more accurate. In addition, in the present disclosure, cigarette fly-ash areas during cigarette moving smoking process and ash-flicking process are used as cigarette fly-ash amount indicators. Objective and accurate characterization of cigarette fly-ash indicators are used to guide cigarette formulation research and quality optimization and upgrading.

## Claims

1. An automatic detection device for quantitative analysis of cigarette fly-ash amount, wherein the detection device comprises: a simulated human smoking unit (1), a fly-ash collecting unit (2), an ash-flicking unit (3), an image acquisition unit (4), an image processing unit and a workbench (6);
The simulated human smoking unit (1) comprises a simulated human smoking-action manipulator (11), a cigarette holder (12) and a cigarette smoking pipe (13); the simulated human smoking-action manipulator (11) is fixed on the workbench (6); the cigarette holder (12) is fixedly connected to the working end of the simulated human smoking-action manipulator (11); the cigarette smoking pipe (13) is connected to the cigarette holder (12); the simulated human smoking-action manipulator (11) is used for simulating the smoking action of humans; the cigarette holder (2) is used for holding cigarettes with different specifications such as different circumferences; the cigarette smoking pipe (13) is connected to a sucking cylinder for smoking cigarettes;
The fly-ash collecting unit (2) comprises a fly-ash collecting belt (21), a belt drive machine (23) and a fly-ash dust collecting device (24), the fly-ash collecting belt (21) is fixed above the workbench (6) through a belt mounting bracket (22);
The fly-ash dust collecting device (24) comprises: a negative pressure dust collecting nozzle (241), a negative pressure hose (242), a fly-ash dust collecting chamber (243), a negative pressure fan (244), and a dust collecting nozzle fixing base (245); the negative pressure dust collecting nozzle (241) is fixed above the workbench (6) through the dust collecting nozzle fixing base (245), and the negative pressure dust collecting nozzle (241) is in communication with the fly-ash dust collecting chamber (243) through the negative pressure hose (242); the fly-ash dust collecting chamber (243) is in communication with the negative pressure fan (244), so as to provide negative pressure to the fly-ash dust collecting chamber (243) and the negative pressure hose (242) as well as the negative pressure dust collecting nozzle (241); the belt drive machine (23) drives the fly-ash collecting belt (21) to move toward the negative pressure dust collecting nozzle (241); the negative pressure dust collecting nozzle (241) and the fly-ash collecting belt (21) are at the same level, the negative pressure hose (242), the fly-ash dust collecting chamber (243) and the negative pressure fan (244) are located below the workbench (6);
The ash-flicking unit (3) is separately disposed outside the simulated human smoking-action manipulator (11); the ash-flicking unit comprises a cigarette knocking component (31) and/or a cigarette flicking component (32), a falling-ash collecting box (33) and an ash-flicking mounting column (34), the cigarette knocking component (31) and/or the cigarette flicking component (32), and the falling-ash collecting box (33) are fixed above the workbench (6) through an ash-flicking mounting column (34); the ash-flicking unit (3) is used for simulating knocking/flicking of cigarettes during smoking process, so that the ash falling off from a cigarette combustion ash column can be collected into the falling-ash collecting box (33);
The image acquisition unit (4) is located above the fly-ash collecting belt (21), and the image acquisition unit (4) is used to synchronously acquire the images of cigarette fly-ash falling onto the fly-ash collecting belt (21) during the simulated smoking process;
The image processing unit is connected to the image acquisition unit (4); the image processing unit is used to analyze the images of cigarette fly-ash falling onto the fly-ash collecting belt (21) acquired synchronously by the image acquisition unit (4) during the simulated smoking process, and to quantitatively calculate cigarette fly-ash amount.

2. The detection device of claim 1, wherein the ash-flicking mounting column (34) of the ash-flicking unit (3) is also fixed with a cigarette lighting component (35) and a cigarette extracting component (36);
The cigarette lighting component (35) and the cigarette extracting component (36) are located above the workbench, and the corresponding workbench (6) is provided with a cigarette-butt collecting channel (37), which is connected to a cigarette-butt collecting box (38) below the workbench.

3. The detection device of claim 1, wherein the detection device further comprises a falling-head detection component (7) located on the opposite side of the ash-flicking unit (3), which is used for monitoring whether a cigarette combustion cone falls.

4. The detection device of claim 1, wherein the detection device further comprises an outer cabinet (8), the simulated human smoking unit (1), the fly-ash collecting unit (2), the ash-flicking unit (3), the image acquisition unit (4) and the workbench (6) are located inside the outer cabinet (8); the image acquisition unit (4) is fixed on the top of the outer cabinet (8); the image processing unit is located outside the outer cabinet (8);
The top of the outer cabinet (8) is further provided with a ventilation opening (81), which is in communication with the ventilation duct (82), and the smoke generated by cigarette combustion is discharged into the outer cabinet (8) through the ventilation opening (81) and the ventilation duct (82).

5. The detection device of claim 1, wherein the detection device further comprises a cigarette supplying component (5), which is fixed above the outer cabinet (8).

6. The detection device of claim 1, wherein, when simulating human smoking action, smoking regimes including ISO, FTC, Massachusetts or Canadian intense are adopted.

7. A detection method for quantitative analysis of cigarette fly-ash amount, using the detection device of any one of claims 1-6 to measure, wherein the method comprises the following steps:
Step (1), clamp and ignite the cigarette on the cigarette holder (2), start the simulated human smoking-action manipulator (11) to simulate cigarette smoking according to a set smoking regime, the fly-ash generated during a moving smoking process of the simulated smoking process falls on the fly-ash collecting belt (21);
Step (2), according to the smoking regime, the simulated smoking process also comprises an ash-flicking process, process: knock/flick the cigarette through the ash-flicking unit (3), so that the ash falling off from the cigarette combustion ash column can be collected into the falling-ash collecting box (33); the fly-ash generated during ash-flicking process falls onto the fly-ash collecting belt (21);
Step (3), according to the smoking regime, repeat cigarette smoking and cigarette ash-flicking, stop cigarette smoking and cigarette ash-flicking when the cigarette reaches a set length;
Step (4), acquire cigarette fly-ash images on the cigarette fly-ash collecting belt (21) in real time through the image collecting unit (4) before each ash-flicking and those after ash-flicking, transmit the acquired images to the image processing unit;
Step (5), the image processing unit compares and analyzes the received cigarette fly-ash images, calculates the cigarette fly-ash amount A1 during the cigarette moving smoking process and the cigarette fly-ash amount A2 during the cigarette ash-flicking process;
The accumulation of A1 and A2 is the cigarette fly-ash amount A during the simulated human smoking process.
Wherein step (4) and step (5) are performed in the process of step (1)-step (3).

8. The detection method for quantitative analysis of cigarette fly-ash amount of claim 7, wherein the calculation method of step (5) is as follows:
(51) The cigarette fly-ash amount A1n during the N^{th} cigarette moving smoking process: subtract the N-1^{th} cigarette fly-ash image after ash-flicking from the N^{th} cigarette fly-ash image before ash-flicking, so as to obtain the increment of cigarette fly-ash falling onto the fly-ash collecting belt (21) during the N^{th} cigarette moving smoking process, after graying and binarizing the subtracted image, calculate the fly-ash area in the image, which is the cigarette fly-ash amount A1n during the N^{th} cigarette moving smoking process;
(52) The cigarette fly-ash amount A2n during the N^{th} cigarette ash-flicking process: subtract the N^{th} cigarette fly-ash image before ash-flicking from the N^{th} cigarette fly-ash image after ash-flicking, so as to obtain the increment of cigarette fly-ash falling onto the fly-ash collecting belt (21) during the N^{th} cigarette ash-flicking process, after graying and binarizing the subtracted image, calculate the fly-ash area in the image, which is the cigarette fly-ash amount A2n during the N^{th} cigarette ash-flicking process;
According to the above process, calculate cigarette fly-ash amount during each cigarette moving smoking process and that during each cigarette ash-flicking process, the accumulation is the cigarette fly-ash amount A during the simulated human smoking process.

## Patentansprüche

1. Eine automatische Detektionseinrichtung zur quantitativen Analyse einer Zigaretten-Flugasche-Menge, wobei die Detektionseinrichtung umfasst: eine simulierte menschliche Rauchereinheit (1), eine Flugasche-Sammeleinheit (2), eine Ascheschleudereinheit (3), eine Bilderfassungseinheit (4), eine Bildverarbeitungseinheit und eine Werkbank (6);
Die simulierte menschliche Rauchereinheit (1) umfasst einen simulierten menschlichen Raucheraktionsmanipulator (11), einen Zigarettenhalter (12) und ein Zigarettenrauchrohr (13); der simulierte menschliche Raucheraktionsmanipulator (11) ist an der Werkbank (6) befestigt; der Zigarettenhalter (12) ist fest mit dem Arbeitsende des simulierten menschlichen Raucheraktionsmanipulators (11) verbunden; das Zigarettenrauchrohr (13) ist mit dem Zigarettenhalter (12) verbunden; der simulierte menschliche Raucheraktionsmanipulator (11) wird zur Simulation der Aktion des Rauchens von Menschen verwendet; der Zigarettenhalter (2) wird zum Halten von Zigaretten mit verschiedenen Spezifikationen, wie z. B. verschiedenen Umfängen, verwendet; das Zigarettenrauchrohr (13) ist zum Rauchen von Zigaretten mit einem Saugzylinder verbunden;
Die Flugasche-Sammeleinheit (2) umfasst ein Flugasche-Sammelband (21), eine Band-Antriebsmaschine (23) und eine Flugasche-Staub-Sammelvorrichtung (24), wobei das Flugasche-Sammelband (21) oberhalb der Werkbank (6) durch eine Band-Halterung (22) befestigt ist;
Die Flugasche-Staub-Sammelvorrichtung (24) umfasst: eine Unterdruck-Staub-Sammeldüse (241), einen Unterdruck-Schlauch (242), eine Flugasche-Staub-Sammelkammer (243), einen Unterdruck-Ventilator (244) und eine Staub-Sammeldüsen-Befestigungsbasis (245); die Unterdruck-Staub-Sammeldüse (241) ist über der Werkbank (6) durch die Staub-Sammeldüsen-Befestigungsbasis (245) befestigt, und die Unterdruck-Staub-Sammeldüse (241) steht mit der Flugasche-Staub-Sammelkammer (243) durch den Unterdruck-Schlauch (242) in Verbindung; die Flugasche-Staub-Sammelkammer (243) steht mit dem Unterdruck-Ventilator (244) in Verbindung, um der Flugasche-Staub-Sammelkammer (243) und dem Unterdruck-Schlauch (242) sowie der Unterdruck-Staub-Sammeldüse (241) einen Unterdruck bereitzustellen; die Band-Antriebsmaschine (23) treibt das Flugasche-Sammelband (21) an, so dass sich dieses in Richtung der Unterdruck-Staub-Sammeldüse (241) bewegt; die Unterdruck-Staub-Sammeldüse (241) und das Flugasche-Sammelband (21) befinden sich auf derselben Höhe, der Unterdruckschlauch (242), die Flugasche-Staub-Sammelkammer (243) und der Unterdruck-Ventilator (244) befinden sich unterhalb der Werkbank (6);
Die Ascheschleudereinheit (3) ist separat außerhalb des simulierten menschlichen Raucheraktionsmanipulators (11) angeordnet; die Ascheschleudereinheit umfasst eine Zigarettenklopfkomponente (31) und/oder eine Zigarettenschnippkomponente (32), einen Fallasche-Sammelkasten (33) und eine Ascheschleuderbefestigungssäule (34), wobei die Zigarettenklopfkomponente (31) und/oder die Zigarettenschnippkomponente (32) und der Fallasche-Sammelkasten (33) durch eine Ascheschleuderbefestigungssäule (34) oberhalb der Werkbank (6) befestigt sind; die Ascheschleudereinheit (3) dient zur Simulation des Klopfens/Schnippens von Zigaretten während des Rauchprozesses, so dass die von einer Zigarettenverbrennungs-Aschesäule herabfallende Asche in dem Fallasche-Sammelkasten (33) gesammelt werden kann;
Die Bilderfassungseinheit (4) befindet sich oberhalb des Flugasche-Sammelbands (21), und die Bilderfassungseinheit (4) dient zur synchronen Erfassung von Bildern von Zigaretten-Flugasche, die während des simulierten Rauchprozesses auf das Flugasche-Sammelband (21) fällt;
Die Bildverarbeitungseinheit ist mit der Bilderfassungseinheit (4) verbunden; die Bildverarbeitungseinheit wird dazu verwendet, die von der Bilderfassungseinheit (4) während des simulierten Rauchprozesses synchron erfassten Bilder der auf das Flugasche-Sammelband (21) fallenden Zigaretten-Flugasche zu analysieren und die Zigaretten-Flugasche-Menge quantitativ zu berechnen.

2. Die Detektionseinrichtung nach Anspruch 1, wobei die Ascheschleuderbefestigungssäule (34) der Ascheschleudereinheit (3) ebenfalls mit einer Zigarettenanzündkomponente (35) und einer Zigarettenentnahmekomponente (36) befestigt ist;
Die Zigarettenanzündkomponente (35) und die Zigarettenentnahmekomponente (36) befinden sich oberhalb der Werkbank, und die entsprechende Werkbank (6) ist mit einem Zigarettenkippen-Sammelkanal (37) versehen, der mit einem Zigarettenkippen-Sammelkasten (38) unterhalb der Werkbank verbunden ist.

3. Die Detektionseinrichtung nach Anspruch 1, wobei die Detektionseinrichtung ferner eine auf der gegenüberliegenden Seite der Ascheschleudereinheit (3) befindliche Fallkopf-Detektionskomponente (7) umfasst, die dazu dient, zu überwachen, ob ein Zigarettenbrennkegel fällt.

4. Die Detektionseinrichtung nach Anspruch 1, wobei die Detektionseinrichtung ferner einen Außenschrank (8) umfasst, die simulierte menschliche Rauchereinheit (1), die Flugasche-Sammeleinheit (2), die Ascheschleudereinheit (3), die Bilderfassungseinheit (4) und die Werkbank (6) innerhalb des Außenschranks (8) angeordnet sind; die Bilderfassungseinheit (4) ist auf der Oberseite des Außenschranks (8) befestigt; die Bildverarbeitungseinheit ist außerhalb des Außenschranks (8) angeordnet;
Die Oberseite des Außenschranks (8) ist ferner mit einer Lüftungsöffnung (81) versehen, die mit dem Lüftungskanal (82) in Verbindung steht, und der durch die Zigarettenverbrennung erzeugte Rauch wird durch die Lüftungsöffnung (81) und den Lüftungskanal (82) in den Außenschrank (8) abgeleitet.

5. Die Detektionseinrichtung nach Anspruch 1, wobei die Detektionseinrichtung ferner eine Zigarettenzuführungskomponente (5) umfasst, die oberhalb des Außenschranks (8) befestigt ist.

6. Die Detektionseinrichtung nach Anspruch 1, wobei bei der Simulation des menschlichen Rauchens Rauchregimes, die ISO, FTC, Massachusetts oder Canadian intense enthalten, zugrunde gelegt werden.

7. Ein Detektionsverfahren zur quantitativen Analyse einer Zigaretten-Flugasche-Menge, wobei die Detektionseinrichtung nach einem der Ansprüche 1 bis 6 zum Messen verwendet wird, wobei das Verfahren die folgenden Schritte umfasst:
Schritt (1), Einspannen und Anzünden der Zigarette auf dem Zigarettenhalter (2), Starten des simulierten menschlichen Raucheraktionsmanipulators (11) zur Simulation des Zigarettenrauchens gemäß einem festgelegten Rauchregime, die während eines bewegten Rauchprozesses des simulierten Rauchprozesses erzeugte Flugasche fällt auf das Flugasche-Sammelband (21);
Schritt (2), gemäß dem Rauchregime umfasst der simulierte Rauchprozess auch einen Asche-Schnipp-Prozess, Prozess: Klopfen/Schnippen der Zigarette durch die Ascheschleudereinheit (3), so dass die von der Zigarettenverbrennungs-Aschesäule abfallende Asche in dem Fallasche-Sammelkasten (33) gesammelt werden kann; die während des Asche-Schnipp-Prozesses erzeugte Flugasche fällt auf das Flugasche-Sammelband (21);
Schritt (3), gemäß dem Rauchregime, Wiederholung des Zigarettenrauchens und des Zigaretten-Asche-Schnippens, Beenden des Zigarettenrauchens und des Zigaretten-Asche-Schnippens, wenn die Zigarette eine festgelegte Länge erreicht;
Schritt (4), Erfassen von Zigaretten-Flugasche-Bildern auf dem Zigaretten-Flugasche-Sammelband (21) in Echtzeit durch die Bilderfassungseinheit (4) vor jedem Asche-Schnippen und denen nach dem Asche-Schnippen, Übertragen der erfassten Bilder an die Bildverarbeitungseinheit;
Schritt (5), die Bildverarbeitungseinheit vergleicht und analysiert die empfangenen Zigaretten-Flugasche-Bilder, berechnet die Zigaretten-Flugasche-Menge A1 während des bewegten Zigaretten-Rauchprozesses und die Zigaretten-Flugasche-Menge A2 während des Zigaretten-Asche-Schnipp-Prozesses,
Die Akkumulation von A1 und A2 ist die Zigaretten-Flugasche-Menge A während des simulierten menschlichen Rauchprozesses.
wobei Schritt (4) und Schritt (5) im Zuge von Schritt (1) bis Schritt (3) durchgeführt werden.

8. Das Detektionsverfahren zur quantitativen Analyse einer Zigaretten-Flugasche-Menge nach Anspruch 7, wobei das Berechnungsverfahren von Schritt (5) wie folgt ist:
(51) Die Zigaretten-Flugasche-Menge A1n während des N-ten bewegten Zigaretten-Rauchprozesses: Subtrahieren des N-1-ten Zigaretten-Flugasche-Bildes nach dem Aschenschnippen von dem N-ten Zigaretten-Flugasche-Bild vor dem Aschenschnippen, um so das Inkrement der Zigaretten-Flugasche zu erhalten, die während des N-ten bewegten Zigaretten-Rauchprozesses auf das Flugasche-Sammelband (21) fällt, nach dem Vergrauen und Binarisieren des subtrahierten Bildes, Berechnen der Flugasche-Fläche in dem Bild, die die Zigaretten-Flugasche-Menge A1n während des N-ten bewegten Zigaretten-Rauchprozesses ist;
(52) die Zigaretten-Flugasche-Menge A2n während des N-ten Zigaretten-Asche-Schnipp-Prozesses: Subtrahieren des N-ten Zigaretten-Flugasche-Bildes vor dem Ascheschleudern von dem N-ten Zigaretten-Flugasche-Bild nach dem Ascheschleudern, um das Inkrement der Zigaretten-Flugasche zu erhalten, die während des N-ten Zigaretten-Asche-Schnipp-Prozesses auf das Flugasche-Sammelband (21) fällt, nach dem Vergrauen und Binarisieren des subtrahierten Bildes, Berechnen der Flugasche-Fläche in dem Bild, die die Zigaretten-Flugasche-Menge A2n während des N-ten Zigaretten-Asche-Schnipp-Prozesses ist;
Gemäß dem obigen Verfahren, Berechnen der Zigaretten-Flugasche-Menge während jedes bewegten Zigaretten-Rauchprozesses, und der während jedes Zigaretten-Asche-Schnipp-Prozesses, die Akkumulation ist die Zigaretten-Flugasche-Menge A während des simulierten menschlichen Rauchprozesses.

## Revendications

1. Un dispositif de détection automatique pour l'analyse quantitative de quantité de cendre volant de cigarette, dans lequel le dispositif de détection comprend : une unité de fumage humaine simulée (1), une unité de collecte de cendre volant (2), une unité pichenette de cendre (3), une unité d'acquisition d'image (4), une unité de traitement d'image et un banc de travail (6) ;
L'unité de fumage humaine simulée (1) comprend un manipulateur d'action de fumage humaine simulée (11), un porte-cigarette (12) et une pipe de fumage de cigarette (13) ; le manipulateur d'action de fumage humaine simulée (11) est fixé sur le banc de travail (6) ; le porte-cigarette (12) est relié de manière fixe à l'extrémité de travail du manipulateur d'action de fumage humaine simulée (11) ; la pipe de fumage de cigarette (13) est reliée au porte-cigarette (12) ; le manipulateur d'action de fumage humaine simulée (11) est utilisé pour simuler l'action de fumage des humains ; le porte-cigarette (2) est utilisé pour tenir des cigarettes avec différentes spécifications telles que différentes circonférences ; la pipe de fumage de cigarette (13) est reliée à un cylindre aspirant pour fumer des cigarettes ;
L'unité de collecte de cendre volant (2) comprend une courroie de collecte de cendre volant (21), une machine d'entraînement de courroie (23) et un dispositif de collecte de poussière de cendre volant (24) ; la courroie de collecte de cendre volant (21) est fixée au-dessus du banc de travail (6) par l'intermédiaire d'un support de montage de courroie (22) ;
Le dispositif de collecte de poussière de cendre volant (24) comprend : une buse de collecte de poussière à pression négative (241), un tuyau à pression négative (242), une chambre de collecte de poussière de cendre volant (243), un ventilateur à pression négative (244), et une base de fixation de buse de collecte de poussière (245) ; la buse de collecte de poussière à pression négative (241) est fixée au-dessus du banc de travail (6) par l'intermédiaire de la base de fixation de buse de collecte de poussière (245), et la buse de collecte de poussière à pression négative (241) est en communication avec la chambre de collecte de poussière de cendre volant (243) par l'intermédiaire du tuyau à pression négative (242) ; la chambre de collecte de cendre volant (243) est en communication avec le ventilateur à pression négative (244), de manière à fournir une pression négative à la chambre de collecte de cendre volant (243) et au tuyau à pression négative (242) ainsi qu'à la buse de collecte de poussière à pression négative (241) ; la machine d'entraînement de courroie (23) entraîne la courroie de collecte de cendre volant (21) en direction de la buse de collecte de poussière à pression négative (241) ; la buse de collecte de poussière à pression négative (241) et la courroie de collecte de cendre volant (21) sont au même niveau, le tuyau à pression négative (242), la chambre de collecte de cendre volant (243) et le ventilateur à pression négative (244) sont situés en dessous du banc de travail (6) ;
L'unité de pichenette de cendre (3) est disposée séparément à l'extérieur du manipulateur d'action de fumage humaine simulée (11) ; l'unité de pichenette de cendre comprend un composant de frappe de cigarette (31) et/ou un composant de pichenette de cigarette (32), une boîte de collecte de cendre tombant (33) et une colonne de montage de pichenette de cendre (34), le composant de frappe de cigarette (31) et/ou le composant de pichenette de cigarette (32), et la boîte de collecte de cendre tombant (33) sont fixés au-dessus du banc de travail (6) par une colonne de montage de pichenette de cendre (34) ; l'unité de pichenette de cendre (3) est utilisée pour simuler la frappe/la pichenette des cigarettes pendant le processus de fumage, de sorte que la cendre tombant d'une colonne de cendre de combustion de cigarette puisse être recueillie dans la boîte de collecte de cendre tombant (33) ;
L'unité d'acquisition d'image (4) est située au-dessus de la courroie de collecte de cendre volant (21), et l'unité d'acquisition d'image (4) est utilisée pour acquérir de manière synchronisée les images de la cendre volant de cigarette tombant sur la courroie de collecte de cendre volant (21) pendant le processus de fumage simulé ;
L'unité de traitement d'image est connectée à l'unité d'acquisition d'image (4) ; l'unité de traitement d'image est utilisée pour analyser les images de la cendre volant de cigarette tombant sur la courroie de collecte de cendre volant (21) acquises de manière synchrone par l'unité d'acquisition d'image (4) pendant le processus de fumage simulé, et pour calculer quantitativement la quantité de cendre volant de cigarette.

2. Le dispositif de détection de la revendication 1, dans lequel la colonne de montage de pichenette de cendre (34) de l'unité de pichenette de cendre (3) est également fixée avec un composant d'éclairage de cigarette (35) et un composant d'extraction de cigarette (36) ;
Le composant d'éclairage de cigarette (35) et le composant d'extraction de cigarette (36) sont situés au-dessus du banc de travail, et le banc de travail (6) correspondant est fourni d'un canal de collecte de mégots (37), qui est relié à une boîte de collecte de mégots (38) située en dessous du banc de travail.

3. Le dispositif de détection de la revendication 1, dans lequel le dispositif de détection comprend en outre un composant de détection de tête tombant (7) situé sur le côté opposé de l'unité de pichenette de cendre (3), qui est utilisé pour surveiller si un cône de combustion de cigarette tombe.

4. Le dispositif de détection de la revendication 1, dans lequel le dispositif de détection comprend en outre une armoire extérieure (8), l'unité de fumage humain simulée (1), l'unité de collecte de cendre volant (2), l'unité de pichenette de cendre (3), l'unité d'acquisition d'image (4) et le banc de travail (6) sont situés à l'intérieur de l'armoire extérieure (8) ; l'unité d'acquisition d'image (4) est fixée sur le dessus de l'armoire extérieure (8) ; l'unité de traitement d'image est située à l'extérieur de l'armoire extérieure (8) ;
Le dessus de l'armoire extérieure (8) est en outre fourni d'une ouverture de ventilation (81), qui est en communication avec le conduit de ventilation (82), et la fumée générée par combustion de cigarette est évacuée dans l'armoire extérieure (8) à travers l'ouverture de ventilation (81) et le conduit de ventilation (82).

5. Le dispositif de détection de la revendication 1, dans lequel le dispositif de détection comprend en outre un composant d'alimentation en cigarettes (5), qui est fixé au-dessus de l'armoire extérieure (8).

6. Le dispositif de détection de la revendication 1, dans lequel, lors que simulant d'action de fumage humaine, des régimes de fumage incluant ISO, FTC, Massachusetts ou intense canadien sont adoptés.

7. Une méthode de détection pour l'analyse quantitative de la quantité de cendre volant de cigarette, utilisant le dispositif de détection de l'une des revendications 1 à 6 pour mesurer, dans laquelle la méthode comprend les étapes suivantes :
Étape (1), serrer et allumer la cigarette sur le porte-cigarette (2), démarrer le manipulateur d'action de fumage humaine simulée (11) pour simuler du fumage de cigarette selon un régime de fumage réglé, la cendre volant générée pendant un processus de fumage en mouvement du processus de fumage simulé tombe sur la courroie de collecte de cendre volant (21) ;
Étape (2), selon le régime de fumage, le processus de fumage simulé comprend également un processus de pichenette de cendre, process : frappe/pichenette la cigarette par l'intermédiaire de l'unité de pichenette de cendre (3), de sorte que la cendre tombant de la colonne de cendre de combustion de cigarette puisse être collectée dans la boîte de collecte de cendre (33) ; la cendre volant générée pendant le processus de pichenette de cendre tombe sur la courroie de collecte de cendre volant (21) ;
Étape (3), selon le régime de fumage, répéter fumage de cigarette et pichenette de cigarette, arrête de fumage de cigarette et de pichenette de cigarette lorsque la cigarette atteint une longueur réglée ;
Étape (4), acquérir des images de cendre volant de cigarette sur la courroie de collecte de cendre volant (21) de cigarette en temps réel par l'intermédiaire de l'unité d'acquisition d'image (4) avant chaque pichenette de cendre et ceux après pichenette de cendre, transmettre les images acquises à l'unité de traitement d'image ;
Étape (5), l'unité de traitement d'image compare et analyse les images de cendre volant de cigarette reçues, calcule la quantité de cendre volant de cigarettes A1 pendant le processus de fumage de cigarette en mouvement et la quantité de cendre volant de cigarette A2 pendant le processus de pichenette de cigarette ;
Le cumul de A1 et de A2 est la quantité de cendre volant de cigarette A pendant le processus de fumage humain simulé ;
Dans laquelle l'étape (4) et l'étape (5) sont effectuées dans le processus de l'étape (1)-étape (3).

8. La méthode de détection pour l'analyse quantitative de la quantité de cendre volant de cigarette selon la revendication 7, dans laquelle la méthode de calcul de l'étape (5) est comme suit :
(51) La quantité de cendre volant de cigarette A1n pendant le N^{ième} processus de fumage de cigarette en mouvement : soustraire la N-1^{ème} image de cendre volant de cigarette avant pichenette de cendre de la N^{ième} image de cendre volant de cigarette après pichenette de cendre, de manière à obtenir l'incrément de cendre volant de cigarette tombant sur la courroie de collecte de cendre volant (21) pendant le N^{ième} processus de fumage de cigarette en mouvement, après avoir grisé et binarisé l'image soustraite, calculer la zone de cendre volant dans l'image, qui est la quantité de cendre volant de cigarette A 1 n pendant le N^{ième} processus de fumage de cigarette en mouvement ;
(52) La quantité de cendre volant de cigarette A2n pendant le N^{ième} processus de pichenette de cendre volant : soustraire la N^{ième} image de cendre volant de cigarette avant pichenette de cendre de la N^{ième} image de cendre volant de cigarette après pichenette de cendre, de manière à obtenir l'incrément de cendre volant de cigarette tombant sur la courroie de collecte de cendre volant (21) pendant le N^{ième} processus de pichenette de cendre de cigarette, après avoir grisé et binarisé l'image soustraite, calculer la zone de cendre volant dans l'image, qui est la quantité de cendre volant de cigarette A2n pendant le N^{ième} processus de pichenette de cendre de cigarette ;
Selon le processus ci-dessus, calculer la quantité de cendre volant de cigarette pendant chaque processus de fumage de cigarette en mouvement et pendant chaque processus de pichenette de cendre, l'accumulation est la quantité de cendre volant de cigarette A pendant le processus de fumage humain simulé.
